# EUROPÄISCHE PATENTSCHRIFT

(11) **EP 3 837 637 B1**
(45) Veröffentlichungstag und Bekanntmachung des Hinweises auf die Patenterteilung: **26.04.2023**
(21) Anmeldenummer: 19755580.8
(22) Anmeldetag: 13.08.2019
(51) Int. Cl.: G06K 19/07

(54) **IDENTIFIKATIONSEINRICHTUNG, IDENTIFIKATIONSSYSTEM UND VERFAHREN ZUR IDENTIFIKATION EINES OBJEKTS**
IDENTIFICATION DEVICE, IDENTIFICATION SYSTEM AND METHOD FOR IDENTIFYING AN OBJECT
DISPOSITIF D'IDENTIFICATION, SYSTÈME D'IDENTIFICATION ET PROCÉDÉ PERMETTANT D'IDENTIFIER UN OBJET

(30) Priorität: 17.08.2018 DE 102018120103
(43) Veröffentlichungstag der Anmeldung: 23.06.2021
(73) Patentinhaber: Fraunhofer-Gesellschaft zur Förderung der angewandten Forschung e.V., 80686 München (DE)
(72) Erfinder: HINSCH, Andreas, 79254 Oberried (DE); WAGNER, Lukas, 79110 Freiburg (DE)
(74) Vertreter: LBP Lemcke, Brommer & Partner Patentanwälte mbB
(86) Internationale Anmeldenummer: PCT/EP2019/071757
(87) Internationale Veröffentlichungsnummer: WO 2020/035509

(56) Entgegenhaltungen:
- EP-A2- 2 006 797
- US-A- 5 355 222
- US-A- 5 874 724
- US-A1- 2010 096 447

## Beschreibung

Die vorliegende Erfindung betrifft eine Identifikationsvorrichtung gemäß Oberbegriff des Anspruchs 1, ein Identifikationssystem mit solch einer Identifikationsvorrichtung und ein Verfahren zur Identifikation eines Objekts gemäß Oberbegriff des Anspruchs 11.

In vielen Bereichen des täglichen Lebens sowie bei industriellen Abläufen ist eine schnelle und fehlerfreie Identifikation von Objekten notwendig.

Es ist daher bekannt, Identifikationsmuster auf einem Objekt anzubringen und mittels einer Empfangseinheit auszulesen und auszuwerten. In Form von Strichcodes (Barcode) sind optoelektronisch lesbare Schriften bekannt, die aus parallelen Linien und Zwischenräumen mit unterschiedlichen Breiten bestehen. Durch eine entsprechende Empfangseinheit kann in kurzer Zeit und mit geringer Fehleranfälligkeit ein solcher Barcode ausgelesen werden, der genormten Zeichen entspricht, sodass das Objekt über eine zugeordnete Identifikationszeichenkette identifiziert werden kann.

Es sind eindimensionale Strichcodes (beispielsweise EAN-13) sowie zweidimensionale Codes wie beispielsweise der QR-Code bekannt.

Typischerweise werden solche Identifikationsmuster in einem scannenden Verfahren ausgelesen: Ein Laserstrahl der von einem in oder an der Empfangseinheit angeordneten Laser ausgesandt wird, streicht über das Identifikationsmuster und die Reflexion des Laserstrahls wird mittels der Empfangseinheit detektiert, um stärker reflektierende Bereiche und weniger stark reflektierende Bereiche zu trennen und so die Struktur des Identifikationsmusters zu erkennen. Nachteilig ist hierbei, dass eine hohe Lichtintensität des reflektierten Strahls notwendig ist, um eine schnelle und fehlerfreie Identifikation des Identifikationsmusters zu ermöglichen.

US 2010/096447 beschreibt eine Identifikationsvorrichtung mit einer Solarzelle zum Bereitstellen elektrischer Energie für die Identifikationseinrichtung, mit einem Sensor und mit einer Identifikationssteuereinheit zur Verarbeitung der 5 Messsignale des Sensors und einem Lichtemitter zum Aussenden eines Identifikation-Lichtsignals.

WO 2006/046183 zeigt die Merkmale des Oberbegriffs von Anspruch 1.

Der vorliegenden Erfindung liegt daher die Aufgabe zugrunde, eine Identifikationsvorrichtung und ein Verfahren zur Identifikation eines Objekts zur Verfügung zu stellen, welche die vorgenannten Nachteile vermeiden.

Gelöst wird diese Aufgabe durch eine Identifikationsvorrichtung gemäß Anspruch 1, ein Identifikationssystem mit einer solchen Identifikationsvorrichtung gemäß Anspruch 10 sowie ein Verfahren zur Identifikation eines Objekts gemäß Anspruch 11. Vorteilhafte Ausgestaltungen finden sich in den abhängigen Unteransprüchen.

Das erfindungsgemäße Verfahren ist bevorzugt zur Durchführung mittels der erfindungsgemäßen Identifikationsvorrichtung und des erfindungsgemäßen Identifikationssystems, insbesondere bevorzugte Ausführungsformen hiervon, ausgebildet. Die erfindungsgemäße Identifikationsvorrichtung und das erfindungsgemäße Identifikationssystem sind bevorzugt zur Durchführung des erfindungsgemäßen Verfahrens, insbesondere bevorzugte Ausführungsformen hiervon, ausgebildet.

Die erfindungsgemäße Identifikationsvorrichtung weist einen optischen Detektor, eine Steuereinheit und eine Identifikations-Sendeeinheit auf. Der optische Detektor weist eine Detektionsfläche mit einem die Detektionsfläche teilweise bedeckenden Identifikationsmuster auf. Die Steuereinheit ist mit dem Detektor und der Identifikations-Sendeeinheit derart zusammenwirkend ausgebildet, dass abhängig von einer Analyse der zeitlichen Abfolge von Messsignalen des Detektors die Identifikations-Sendeeinheit zum Senden eines Identifikationssignals ansteuerbar ist.

Bei den vorbekannten Identifikationsvorrichtungen, welche ausschließlich aus einem Identifikationsmuster bestehen, handelt es sich um passive Einheiten, deren wesentliche Funktion in Bereichen mit stärkerer und Bereichen mit demgegenüber schwächerer Reflexion eines Laserstrahls besteht.

Im Gegensatz hierzu handelt es sich bei der erfindungsgemäßen Identifikationsvorrichtung um eine aktive Einheit: Der Detektor der Identifikationsvorrichtung weist eine Detektionsfläche auf, welche teilweise durch das Identifikationsmuster bedeckt ist. Überstreicht nun beispielsweise ein Scanstrahl, insbesondere ein punkt- oder linienförmiger Scanstrahl, bevorzugt ein Laserstrahl als Scanstrahl das Identifikationsmuster, so werden abhängig von der Form und der Anordnung von Teilbereichen des Identifikationsmusters eine zeitliche Abfolge von Signalen des Detektors generiert. Es erfolgt somit keine räumlich auflösende zeitgleiche Erfassung, sondern eine zeitlich aufgelöste serielle Erfassung. Die Information des Identifikationsmusters wird somit durch den Scanstrahl, welcher das Identifikationsmuster überstreicht, in eine zeitlich seriell codierte Information übertragen. Mittels der Steuereinheit ist eine Analyse der zeitlichen Abfolge der Messsignale des Detektors möglich. Abhängig von dieser Analyse erfolgt ein Senden eines Identifikationssignals. Das Identifikationsmuster ist somit bevorzugt ausgebildet, den Scanstrahl zu reflektieren und/oder absorbieren, so dass in den von dem Identifikationsmuster bedeckten Bereichen der Detektionsfläche der Scanstrahl nicht oder zumindest nur mit einer verringerten Intensität, insbesondere eine um mindestens einen Faktor 10, bevorzugt mindestens einen Faktor 100, insbesondere zumindest einen Faktor 1000 verringerten Intensität in den Detektionsbereich eindringt, verglichen mit dem auf einen nicht durch das Identifikationsmuster bedeckten Bereich auftreffenden Scanstrahl.

Die erfindungsgemäße Identifikationsvorrichtung weist den Vorteil auf, dass durch das Senden eines Identifikationssignals mittels der Identifikations-Sendeeinheit wesentlich geringere Anforderungen an die Intensität eines Laserstrahls zur Identifikation der Identifikationsvorrichtung gestellt werden: Es ist bei der erfindungsgemäßen Identifikationsvorrichtung nicht notwendig, dass ein von dem Identifikationsmuster reflektierter Laserstrahl bzw. von Zwischenbereichen im Identifikationsmuster reflektierter Laserstrahl mit ausreichender Intensität zu einer Empfangseinheit reflektiert wird. Vielmehr kann mittels der Identifikations-Sendeeinheit stets eine ausreichende Intensität des von der Identifikations-Sendeeinheit ausgesandten Identifikationssignals sichergestellt werden. Bei vorbekannten Methoden zur Identifikation von BarCodes oder QR-Codes wird der von dem Identifikationsmuster reflektierte Strahl mittels einer Kamera aufgenommen. Entsprechend stellt der eigentliche Code nur einen Bruchteil des erfassten Kamerabildes da, so dass mittels Bildbearbeitung die Information erfasst werden muss, beispielsweise durch Filter. Bei der vorliegenden Erfindung wird lediglich eine spezifizierte Information mittels der Identifikations-Sendeeinheit gesendet.

Es ist somit eine im Vergleich mit dem Stand der Technik schnellere Identifikation sowie eine Identifikation über größere Entfernungen mittels der erfindungsgemäßen Identifikationsvorrichtung möglich.

Das erfindungsgemäße Verfahren zur Identifikation eines Objekts mittels eines Identifikationssystems weist die Verfahrensschritte auf:
- Senden eines Scanstrahls mittels einer Scanstrahl-Sendeeinheit, so dass der Scanstrahl eine teilweise durch ein Identifikationsmuster bedeckte Detektionsfläche eines Detektors einer Identifikationsvorrichtung überstreicht,
- Empfangen von Strahlung, welche von der Identifikationsvorrichtung ausgeht.

Wesentlich ist, dass mittels der Identifikationsvorrichtung ein Auswerten von Messsignalen des Detektors und abhängig von der Messsignalauswertung ein aktives Senden eines Identifikationssignals mittels einer Identifikations-Sendeeinheit der Identifikationsvorrichtung erfolgt.

Hierdurch ergeben sich die zuvor bei Beschreibung der erfindungsgemäßen Identifikationsvorrichtung und anschließend aufgeführten Vorteile.

Die erfindungsgemäße Identifikationsvorrichtung und das erfindungsgemäße Verfahren zur Identifikation eines Objekts ermöglichen somit einerseits eine Trennung eines Lesesignals (mittels des Scanstrahls), welches einer Scanstrahl-Sendeeinheit zu der Identifikationsvorrichtung gesendet wird, von dem Identifikationssignal, welches von der Identifikationsvorrichtung mittels der Identifikations-Sendeeinheit zu einer Empfangs-Auswerteeinheit gesendet wird, welche üblicherweise in die Scanstrahl-Sendeeinheit integriert ist.

Weiterhin kann mittels der Steuereinheit vermieden werden, dass ständig ein Identifikationssignal gesendet wird: Mittels der Steuereinheit erfolgt eine Analyse der zeitlichen Abfolge von Messsignalen des Detektors. Bei einem scannenden, von einer Scanstrahl-Sendeeinheit ausgesandten optischen Scanstrahl, welcher die Detektionsfläche mit dem Identifikationsmuster überstreicht, ergibt sich aufgrund der teilweisen Bedeckung der Detektionsfläche durch das Identifikationsmuster eine zeitliche Abfolge von Messsignalen des Detektors. Es ist somit grundsätzlich möglich, ein "Lesen" der Identifikationsvorrichtung durch einen Scanstrahl, welcher die Detektionsfläche überstreicht, zu identifizieren. Insbesondere kann in einfacher Weise ein solcher Lesegang von einer Dauerbeleuchtung der Detektionsfläche unterschieden werden.

In einer vorteilhaften Ausführungsform ist die Steuereinheit zur Durchführung einer Hochpassfilterung der Messsignale des Detektors ausgebildet. Hierdurch wird in einfacher Weise erzielt, dass eine Beaufschlagung der Detektionsfläche des Detektors mit Strahlung, die zu einem dauerhaften oder sich nur langsam ändernden Messsignal des Detektors führt, bereits mittels der Hochpassfilterung herausgefiltert wird und somit bei Vorliegen solcher Messsignale, welche eine vorgegebene Mindestfrequenz nicht überschreiten, kein Senden eines Identifikationssignals erfolgt. Eine besonders kostengünstige vorteilhafte Ausgestaltung der Identifikationsvorrichtung wird erzielt, indem die Analyse der zeitlichen Abfolge von Messsignalen ausschließlich durch eine Hochpassfilterung erfolgt.

Hochpassfilterungen sind an sich bekannt und können kostengünstig als elektronische Bauelemente realisiert werden. In dieser vorteilhaften Ausführungsform ist somit in robuster und kostengünstiger Weise eine Analyse der zeitlichen Abfolge von Messsignalen des Detektors realisiert. Die Mindestfrequenz der Änderung der Messsignale des Detektors, unterhalb derer keine Identifikationssignale ausgesandt werden, ist bevorzugt größer 100kHz, insbesondere größer 1 MHz insbesondere 5 MHz. Bevorzugt liegt die vorgegebene Mindestfrequenz des Hochpassfilters im Bereich 300 kHz bis 3 MHz.

Wie zuvor beschrieben, weist die erfindungsgemäße Identifikationsvorrichtung und ebenso das erfindungsgemäße Verfahren den Vorteil auf, dass das Senden des Identifikationssignals unabhängig von einem Scanstrahl erfolgt, da das Identifikationssignal nicht mit passiv mittels Reflexion des Scanstrahls erzeugt wird, sondern aktiv mittels der Identifikations-Sendeeinheit.

Vorteilhafterweise weist die Steuereinheit daher eine Verstärkereinheit auf, um das Messsignal verstärkt an die Identifikations-Sendeeinheit weiterzuleiten.

Hierdurch wird insbesondere eine größere Entfernung zwischen einer Sende- und Empfangseinheit und der Identifikationsvorrichtung ermöglicht.

Vorteilhafterweise erfolgt somit ein Senden des Messsignals des Detektors in verstärkter und insbesondere bevorzugt weiterbearbeiteter Form mittels der Identifikations-Sendeeinheit als Identifikationssignal.

Insbesondere die Kombination einer Hochpassfilterung mit einer Verstärkereinheit ermöglicht in kostengünstiger und robuster Weise die Realisierung einer Identifikationsvorrichtung, welche eine erheblich größere Reichweite im Vergleich zu vorbekannten Identifikationsmustern wie beispielsweise Barcodes bietet.

Vorteilhafterweise bildet das Messsignal des Detektors die Basis für das ausgesandte Identifikationssignal. In dieser vorteilhaften Ausführungsform wird somit durch das Identifikationsmuster, welches ein Scanstrahl überstreicht, eine Grundform eines Messsignals des Detektors vorgegeben, welche, gegebenenfalls nach weiterer Bearbeitung, beispielsweise wie zuvor beschrieben durch Hochpassfilterung und/oder Verstärkung, insbesondere Hochpassfilterung und Verstärkung, als Identifikationssignal mittels der Identifikations-Sendeeinheit gesendet wird. Hierdurch ist eine technisch unaufwendige Realisierung erzielt, da keine aufwendige Rechnereinheit, insbesondere keine Computereinheit, mit einem Prozessor und einem Programmspeicher benötigt wird.

Ebenso liegt es im Rahmen der Erfindung, eine weitergehende Analyse und Bearbeitung des Messsignals des Detektors durchzuführen. In einer weiteren bevorzugten Ausführungsform weist die Steuereinheit der Identifikationsvorrichtung eine Rechnereinheit und einen Programmspeicher, insbesondere eine Computereinheit auf, um eine Analyse der zeitlichen Abfolge der Messsignale des Detektors und bevorzugt weitere Analysen durchzuführen. Anschließend kann unabhängig von der Grundform des Messsignals des Detektors ein Identifikationssignal mittels der Identifikations-Sendeeinheit gesendet werden, insbesondere ein in einem Programmspeicher der Rechnereinheit abgelegtes Identifikationssignal. Hierdurch ist es somit möglich, ein beliebiges Identifikationssignal, insbesondere ein stets gleichbleibendes Identifikationssignal mittels der Identifikations-Sendeeinheit zu senden, unabhängig von beispielsweise der Geschwindigkeit, mittels derer ein Scanstrahl die Detektionsfläche und das Identifikationsmuster überstreicht. Zur Codierung eines Erkennungscodes für die Identifikationsvorrichtung kann auf übliche Datencodierungen zurückgegriffen werden. Beispielsweise kann mittels des Morse-Codes eine Kennung als Identifikationssignal mittels der Identifikations-Sendeeinheit ausgesandt werden.

In einer vorteilhaften Ausführungsform ist die Wellenlänge oder Wellenlängenbereich des Scanstrahls unterschiedlich zu der Wellenlänge oder dem Wellenlängenbereich der von der Identifikations-Sendeeinheit ausgesandten Strahlung. Hierdurch kann bei der Empfangseinheit eine Filterung auf die Wellenlänge oder den Wellenlängenbereich der Identifikations-Sendeeinheit erfolgen, sodass ein reflektierter Scanstrahl nicht zu Lesefehlern führen kann. In einer weiteren vorteilhaften Ausführungsform ist die Detektorfläche zumindest teilweise, bevorzugt zumindest in den nicht durch das Identifikationsmuster bedeckten Bereiche mit einer Filterschicht versehen, welche Strahlung außerhalb eines vorgegebenen Scanstrahl-Spektrums filtert oder zumindest deren Intensität erheblich abschwächt, bevorzugt zumindest um einen Faktor 10, insbesondere zumindest um einen Faktor 100. Hierdurch erfolgt eine weitere Abstimmung zwischen dem Spektrum des Scanstrahls und der Identifikationsvorrichtung, das Strahlung außerhalb des Scanstrahlspektrums nicht oder nur mit verringerter Intensität in den Detektor eindringt.

Es ist vorteilhaft, für die erfindungsgemäße Identifikationsvorrichtung einen Detektor mit einer großflächigen Detektionsfläche zu verwenden, um ein detailreiches Identifikationsmuster zu ermöglichen. Vorteilhafterweise ist der Detektor daher als Halbleiter-Photodetektor ausgebildet. Insbesondere ist es vorteilhaft, dass der Detektor als Perowskit-Photodetektor ausgebildet ist. Perowskit-Photodetektoren weisen den Vorteil auf, dass eine kostengünstige, großflächige Herstellung möglich ist und darüber hinaus Reaktionszeiten weit unterhalb von 1 µs erzielt werden können (siehe https://doi.org/10.1038/ncomms13831).

Der Detektor weist somit bevorzugt zumindest eine Perowskit-Schicht zur Absorption des Scanstrahls und Umwandlung in ein elektrisches Messsignal auf.

Vorteilhafterweise weist die Identifikationsvorrichtung eine photovoltaische Solarzelle zur Energieversorgung auf. Hierdurch wird somit zumindest teilweise, bevorzugt vollständig, die benötigte elektrische Energie durch Umwandlung einfallender Strahlung mittels der photovoltaischen Solarzelle bereitgestellt. Besonders vorteilhaft ist es, zusätzlich einen Energiezwischenspeicher vorzusehen, welcher mit der Solarzelle verbunden ist. Hierdurch kann die Energie einfallender Strahlung zwischengespeichert werden, auch wenn zu diesem Zeitpunkt keine Analyse und kein Auffinden eines Identifikationssignals erfolgt. Es wird somit ein autarkes Arbeiten einer Identifikationsvorrichtung insbesondere auch bei längerer Abschattung, wie beispielsweise nachts, ermöglicht.

Vorteilhafterweise ist der Energiezwischenspeicher als Akkumulator mit bevorzugt nachgeschaltetem Kondensator ausgebildet, vorteilhafterweise in Dünnschichttechik oder SMD-Bauform ausgeführt. Hierdurch wird in konstruktiv einfacher, kostengünstiger und robuster Weise ein Energiezwischenspeicher zur Verfügung gestellt. Vorteilhafterweise weist der Akkumulator eine Speicherkapazität größer als 1 mAh, insbesondere größer als 50 mAh auf. Insbesondere weist der Akkumulator bevorzugt eine Kapazität im Bereich 1 mAh bis 10 mAh auf. Vorteilhafterweise weist der Kondensator eine elektrische Kapazität größer als 3 µF, insbesondere größer als 50 µF auf. Insbesondere weist der Kondensator bevorzugt eine Kapazität im Bereich 1 µF bis 10 µF.

Vorteilhafterweise ist die Identifikationsvorrichtung derart ausgestaltet, dass erst das Eintreffen des durch das Auftreffen von Scanstrahlung auf den Detektor induzierten Signals in der Steuereinheit, insbesondere nach einem Passieren dieses Signals durch eine Hochpassfilterstufe zwischen Detektor und Steuereinheit , ein Anschalten der Steuereinheit bewirkt (so dass keine Energie zur Aufrechterhaltung der Kommunikation zwischen Sender und Empfänger in der Ruhephase -also der Phase in der keine Information ausgetauscht wird- benötigt wird.

Eine besonders kostengünstige Ausgestaltung wird in einer weiteren vorteilhaften Ausführungsform erzielt, indem die photovoltaische Solarzelle und der Photodetektor auf den gleichen Halbleitermaterialien basierend ausgebildet sind. Insbesondere ist es vorteilhaft, dass photovoltaische Solarzelle und Photodetektor auf Perovskit basierend ausgebildet sind. Hierdurch ergibt sich ein kostengünstiger Herstellungsprozess, bei welchem eine gleichzeitige oder zumindest unmittelbar aufeinanderfolgende Prozessierung von Solarzelle und Photodetektor erfolgt.

Die Identifikationsvorrichtung ist bevorzugt derart ausgebildet, dass die Detektionsfläche entlang zumindest einer geraden Linie auf der Detektionsoberfläche mehrfach alternierend durch das Identifikationsmuster bedeckt ist. In einer vorteilhaften Ausführungsform des erfindungsgemäßen Verfahrens wird die Detektionsoberfläche mittels des Scanstrahls entlang einer geraden Linie überstrichen. Durch die zuvor beschriebene vorteilhafte Ausführungsform des Identifikationsmusters unterbricht das Identifikationsmuster mehrfach das Eindringen des Scanstrahls in den Detektor oder führt zumindest zu einer erheblichen Abschwächung, sodass entsprechend eine zeitliche Abfolge von Messsignalen erzeugt wird.

Das Identifikationsmuster ist bevorzugt derart ausgebildet, dass ein verwendeter Scanstrahl in den durch das Identifikationsmuster bedeckten Bereich in der Detektionsoberfläche nicht in den Detektor eindringt oder zumindest erheblich abgeschwächt wird, sodass kein Messsignal entsteht, wenn der Scanstrahl auf das Identifikationsmuster auftrifft oder zumindest ein geringeres, insbesondere um zumindest einen Faktor 2, bevorzugt um zumindest einen Faktor 5, insbesondere um einen Faktor 10 geringeres Messsignal verglichen mit einem Messsignal, bei welchem der Scanstrahl auf einen nicht durch das Identifikationsmuster bedeckten Bereich der Detektionsoberfläche trifft.

Das Identifikationsmuster ist bevorzugt in an sich bekannter Weise ausgebildet. Insbesondere ist das Identifikationsmuster bevorzugt als Barcode ausgebildet. Bei der erfindungsgemäßen Identifikationsvorrichtung erfolgt in dieser vorteilhaften Ausführungsform somit eine Umsetzung des Barcodemusters in eine zeitliche Abfolge von Messsignalen bei Überstreichen des Barcodes durch den Scanstrahl. Im Unterschied zu vorbekannten Anwendungen von Barcodes erfolgt mittels der Empfangseinheit jedoch nicht die Auswertung des reflektierten Scanstrahls, sondern die Auswertung des mittels der Identifikations-Sendeeinheit gesendeten Identifikationssignals.

Ebenso liegt es im Rahmen der Erfindung, dass das Identifikationsmuster ein zweidimensionales Muster ist, insbesondere ein QR-Code.

In einer weiteren vorteilhaften Ausgestaltung ist das Identifikationsmuster als dreidimensionales Muster ausgebildet. Ein solches dreidimensionales Muster weist somit nicht nur Strukturierungen in der Ebene der Detektionsoberfläche auf, sondern ebenfalls Strukturierungen senkrecht zur Ebene der Detektionsoberfläche des Detektors.

Hierdurch wird eine Bestimmung des Winkels zwischen Scanstrahl-Sendeeinheit und Identifikationsvorrichtung und/oder der Entfernung zwischen Scanstrahl-Sendeeinheit und Identifikationsvorrichtung ermöglicht. In einer vorteilhaften Ausführungsform des erfindungsgemäßen Verfahrens wird daher mittels des Messsignals des Detektors und/oder des Identifikationssignals der Winkel zwischen Scanstrahl-Sendeeinheit und Detektionsfläche des Detektors der Identifikationsvorrichtung und/oder die Entfernung zwischen Scanstrahl-Sendeeinheit und Identifikationsvorrichtung bestimmt.

Die eingangs genannte Aufgabe ist ebenfalls durch ein Identifikationssystem mit einer erfindungsgemäßen Identifikationsvorrichtung, insbesondere einer bevorzugten Ausführungsform hiervon, gelöst. Das Identifikationssystem weist eine Scanstrahl-Sendeeinheit zum Senden des optischen Scanstrahls auf, insbesondere eines Laserstrahls als Scanstrahl. Weiterhin weist das Identifikationssystem eine Empfangseinheit für von der Identifikations-Sendeeinheit der Identifikationsvorrichtung ausgesandte Strahlung sowie eine Empfangs-Auswerteeinheit auf, um abhängig von Empfangsdaten der Empfangseinheit die Identifikationsvorrichtung zu identifizieren. Vorteilhafterweise sind Scanstrahl-Sendeeinheit, Empfangs-Auswerteeinheit und Empfangseinheit baulich miteinander verbunden, insbesondere bevorzugt in einem gemeinsamen Gehäuse integriert.

Die Scanstrahl-Sendeeinheit ist bevorzugt ausgebildet, mittels des Scanstrahls die Umgebung zu Scannen, insbesondere, den Scanstrahl in einer Scanrichtung zu bewegen. Es liegt im Rahmen der Erfindung, dass der Scanstrahl oszillierende Scanbewegung und/oder kreisförmige Scanbewegungen und/oder Scanmuster zum Abscannen von Flächen ausführt, insbesondere in an sich bei scannenden Vorrichtungen bekannter Weise.

Vorteilhafterweise ist die Scanstrahl-Sendeeinheit zum Aussenden eines lininenförmigen Scanstrahls ausgebildet. Bevorzugt ist die linienartige Form des Scanstrahls senkrecht zu einer Bewegungsrichtung des Scanstrahls, insbesondere senkrecht zu einer Scan-Richtung ausgebildet, so dass eine bandartige Fläche während es Scanvorgangs überstrichen wird. Dadurch wird die Wahrscheinlichkeit, die Identifikationsvorrichtung bei einem Scan zu treffen, erhöht.

In bestimmten Anwendungen (Überwachung von autonomen Maschinen in Werkhalle, bzw. sich zueinander bewegenden Objekten) kann das Anbringen eines zweiten Detektors mit Identifikationsmuster auf der Identifikationsvorrichtung vorteilhaft sein, insbesondere, wenn diese 90° zum ersten ausgerichtet ist. Durch zwei kreuzende zeitlich hintereinander folgende Scan-Vorgänge, vorteilhafterweise in 90° zueinander stehender Richtung, kann so auf Seiten des Identifikationssystems die relative Position der Identifikationsvorrichtung genau bestimmt werden.

Vorteilhafterweise weist die erfindungsgemäße Identifikationsvorrichtung daher einen weiteren, zweiten optischen Detektor mit einer Detektionsfläche und einem die Detektionsfläche teilweise bedeckenden Identifikationsmuster auf, wobei das Identifikationsmuster des zweiten Detektors bevorzugt gleich ausgebildet ist wie das Identifikationsmuster des ersten Detektors. Der zweite Detektor ist wie auch der erste Detektor mit der Steuereinheit verbunden, so dass mittels der Steuereinheit die zeitliche Abfolge von Messsignalen beider Detektoren analysiert wird. Bevorzugt sind die beiden Detektoren nicht parallel, insbesondere bevorzugt senkrecht zueinander angeordnet.

Vorteilhafterweise sendet Scanstrahl-Sendeeinheit einen Scanstrahl, insbesondere bevorzugt einen Laserstrahl im Dauerbetrieb (kontinuierlich, CW). Im Vergleich zu anderen laserbasierten Systemen zur Objekterkennung/ räumlichen Orientierung (z.B. LIDAR, *light detection and ranging*) kann dieser kontinuierliche Laser mit für Menschen unbedenklichen Sendeleistungen (Laserklasse A) im Dauerbetrieb betrieben werden.

Eine weitere bevorzugte Ausführungsform des erfindungsgemäßen Identifikationssystems sieht eine Kombination mit einem LIDAR-System vor: Ein LIDAR-System ermöglicht eine Erfassung der Umgebungsformen, indem ein Pulssignal ausgesendet und die Zeit zwischen Aussenden und Detektieren des gesendeten Pulssignals gemessen wird. In dieser bevorzugten Ausführungsform ist die Scanstrahl-Sendeeinheit zusätzlich als LIDAR-Sendeeinheit ausgebildet und die Empfangseinheit und Empfangs-Auswerteeinheit sind zusätzlich zum Empfang und zur Auswertung nach Art eines LIDAR-Systems ausgebildet. Bevorzugt ist der Scanstrahl hierbei mit einem schnellen Pulssignal moduliert (insbesondere mindestens um einen Faktor 10 schneller als das Signal welches beim Überstreichend er Barcodes generiert wird).

Die Steuereinheit der Identifikationsvorrichtung ist hierbei bevorzugt ausgebildet, um die Identifikations-Sendeeinheit derart zu steuern, dass als Identifikationssignal das Signal der zeitlichen Abfolge aufgrund des Überstreichens des Identifikationsmusters durch den Scanstrahl moduliert mit dem Signal aufgrund des gepulsten Scanstrahls ausgesandt wird. Durch Analyse des Identifikationssignals kann somit sowohl eine Analyse nach Art eines LIDAR-Systems als auch eine wie zuvor beschriebenen Analyse zur Identifikation der Identifikationsvorrichtung durchgeführt werden, insbesondere kann aus dem schnellen Modulationssignal die relative Entfernung zur Identifikationsvorrichtung berechnet. Anders als beim klassischen LIDAR sind hier wesentlich geringere Laserleistungen nötig (da das zurückgesendete Signal nicht reflektiert sondern verstärkt wird). Somit kann eine wesentlich höhere Puls-Rate als bei herkömmlichen LIDAR-Systemen erreicht werden (hier ist die Limitierung für die Pulsrate die Netto-Laserenergie, welche ein für das menschliche Auge schädliche Maß nicht überschreiten darf).Somit stellt diese Version ein LIDAR mit selektiver Erkennung eines gewünschten Objektes dar (im Vergleich zum klassischen LIDAR wird hier nur die relative Position (Richtung und Entfernung) des gesuchten Objekts erkannt)

In einer vorteilhaften Ausführungsform wird, der Laserstrahl mit Hilfe einer adaptiven Optik auf die geschätzte oder bekannte Entfernung der Identifikationsvorrichtung fokussiert.

Die erfindungsgemäße Identifikationsvorrichtung, das erfindungsgemäße Identifikationssystem und das erfindungsgemäße Verfahren erweitern die Verwendung von Identifikationsmustern gegenüber der vorbekannten Verwendung von beispielsweise Barcodemustern erheblich, sodass sich neue Einsatzgebiete erschließen:
So wird mittels der vorliegenden Erfindung eine schnelle Erkennung und Zuordnung von markierten Gegenständen im Straßenverkehr (Autos, Fahrrädern, Kleidung von Fußgängern, Schilder, insbesondere Verkehrsschilder, Hindernisse, etc.) ermöglicht, wenn an diesen Gegenständen jeweils eine erfindungsgemäße Identifikationsvorrichtung vorgesehen ist. Hierdurch wird die Sicherheit erhöht, insbesondere zur Erhöhung der Redundanz in Verbindung mit anderen Erkennungssystemen, wie beispielsweise Videokameras, LIDAR, etc. Insbesondere kann auch der bei Kamerasystemen bestehende Nachteil der sich zeitlich ändernden Lichtverhältnisse vermieden werden.

Insbesondere bei Fahrzeugen wie beispielsweise Autos nimmt der Einsatz von elektronischen Systemen stark zu. Dies betrifft aktuell die Verbesserung der Fahrsicherheit und zukünftig die Einführung von vollständig autonomen Fahrzeugen. Hierfür werden aktuell Systeme basierend auf scannenden NIR-Kurzzeitlasern (LIDAR) zur Abstandsmessung und auf kamerabasierter Bildverarbeitung zur Gegenstandserkennung entwickelt. Für einen sicheren Fahrbetrieb sind mehrere voneinander unabhängige (redundante) Systeme und Technologien erforderlich. Obwohl autonomes Fahren unter Realbedingungen bereits demonstriert wurde, so ist eine kontrollierte Reaktion auf plötzlich frontal oder seitlich auftretende Ereignisse bisher nur unzureichend möglich. Hier bestehen somit Risiken bei den aktuell entwickelten Technologien:
In einem kritischen Zeitbereich unterhalb 1 s, entsprechend einem Bremsweg zwischen 25 m bei 50 km/h Fahrgeschwindigkeit kann mit den bisherigen Techniken nicht genügend Information für eine kontrollierte Brems- und Ausweichreaktion gewonnen werden. Hierfür sind Daten zur Erkennung der Art der Hindernisse, deren Position, Ausrichtung und Relativgeschwindigkeit in zeitlichen Intervallen weit unter 0,1 s und aus einem möglichst weiten Blickradius notwendig. Um die Auswertung der Bildverarbeitung und der LIDAR-Daten in dieser Situation entsprechend beschleunigen zu können, braucht es eine weitere sehr schnelle und störungssichere Detektionsmethode zur Erkennung und Zuordnung der Hindernisse und Ereignisse. Diese wird mit der vorliegenden Erfindung zur Verfügung gestellt.

Die vorliegende Erfindung umfasst somit auch die Verwendung der erfindungsgemäßen Identifikationsvorrichtung zur Identifikation von Objekten im Straßenverkehr.

Ebenso wie die Verkehrstechnologie befindet sich die industrielle Fertigung aktuell in einem Wandel hin zu einer deutlichen Flexibilisierung der Produktion. Dies wird durch eine zunehmende Digitalisierung und Vernetzung von Produktionsobjekten und Produktionsmaschinen ermöglicht, basierend auf dem Einsatz von autonomen Maschinen für individualisierte Fertigung. In einer modernen Fabrik bedeutet dies, dass ein Kommunikationsnetzwerk von Maschine zu Maschine, sowie von Maschine zu Produktionsobjekten hergestellt wird, ebenso wie eine Infrastruktur für die autonome Orientierung von mobilen Maschinen, beispielsweise in der Produktionshalle oder umgekehrt eine Überwachung der Bewegung dieser Maschinen innerhalb des Produktionsbereiches. Wünschenswert ist auch eine unabhängige Überwachung von autonomen Maschinen ohne auf die in den Maschinen ermittelten Positionsdaten zugreifen zu müssen. Die Sicherheit einer solchen Überwachung, das heißt die schnelle und eindeutige Identifizierung, stellt eine große Herausforderung für die aktuelle Weiterentwicklung von Produktionsmethoden dar. Insbesondere wird hierdurch die Produktionsgeschwindigkeit begrenzt.

Ähnliche Verbesserungspotentiale finden sich auch in der modernen Logistik, z.B. Lagerverwaltung durch autonome Roboter/ Regale.

Es ist bekannt, für eine Identifikation von Gegenständen RFID-Transponder oder Strichcodesysteme, wie zuvor beschrieben, insbesondere Barcodes oder QR-Codes, einzusetzen. Diese Systeme ermöglichen die Identifikation eines Gegenstandes durch ein individuelles Erkennungssignal. Nachteilig ist jedoch die kurze Reichweite insbesondere bei der RFID-Technologie: Typischerweise liegt die Reichweite in der Größenordnung von 1 m und überschreitet nur in Ausnahmsfällen 6 m. Bei optischer Erkennung mittels einer Strichcode-Technologie wie Barcode oder QR-Code stellt sich zudem die Herausforderung des Auflösungsvermögens der abbildenden Optik (Raumwinkel + Tiefenschärfe) und des Kamerachips über den gewünschten Blickwinkel sowie einer Bildverarbeitung zur sicheren Erkennung und Decodierung des Signals.

Diese Probleme werden durch die vorliegende Erfindung umgangen, da am Ort des Objekts durch die Steuereinheit eine Analyse der zeitlichen Abfolge von Messsignalen des Detektors der Identifikationsvorrichtung erfolgt und aktiv ein Identifikationssignal mittels der Identifikations-Sendeeinheit ausgesandt wird. Hierdurch können somit erheblich höhere Erkennungsraten sowie Reichweiten erzielt werden.

In einer vorteilhaften Ausführungsform weist die Identifikationsvorrichtung zumindest einen Lichtleiter auf.

Weitere vorteilhafte Merkmale und Ausführungsformen der vorliegenden Erfindung werden nachfolgend anhand von Ausführungsbeispielen und den Figuren erläutert. Dabei zeigt:
- Figur 1: ein erstes Ausführungsbeispiel einer erfindungsgemäßen Identifikationsvorrichtung;
- Figur 2: ein zweites Ausführungsbeispiel einer erfindungsgemäßen Identifikationsvorrichtung mit einem ersten und einem zweiten Detektor;
- Figur 3: ein Ausführungsbeispiel einer Sendeeinheit mit Empfangs-Auswerteeinheit;
- Figur 4: eine Teilansicht eines dritten Ausführungsbeispiels einer erfindungsgemäßen Identifikationsvorrichtung zur Erläuterung eines dreidimensionalen Identifikationsmusters;
- Figur 5: ein Anwendungsbeispiel bei Automobilen und
- Figur 6: ein Anwendungsbeispiel zur Identifizierung und Ortung von Gegenständen in Räumen.

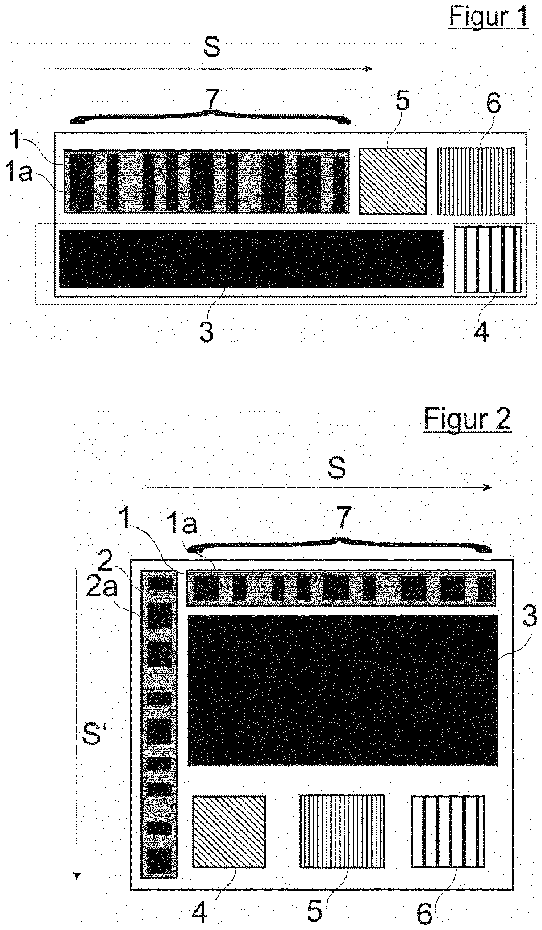

Die Figuren zeigen schematische, nicht maßstabsgetreue Darstellungen. In den Figuren 1 bis 6 bezeichnen gleiche Bezugszeichen gleiche oder gleichwirkende Elemente.

Figur 1 zeigt das erste Ausführungsbeispiel einer erfindungsgemäßen Identifikationsvorrichtung, bei welchem folgende Elemente auf einer gemeinsamen Trägerplatte angeordnet sind: ein erster Detektor 1 eine Solarzelle 3 sowie ein als Akkumulator und/oder Kondensator ausgebildeter Energiezwischenspeicher 4, eine Steuereinheit 5 sowie eine als LED ausgebildete Sendeeinheit 6.

Der Detektor 1 ist als Perovskit-Detektor ausgebildet und weist somit als Detektionsfläche 1a eine Perovskit-Schicht auf, welche einfallende Strahlung absorbiert und mittels Ladungsträgertrennungen in ein elektrisches Messsignal umwandelt. Die Detektionsfläche 1a des optischen Detektors 1 weist ein die Detektionsfläche 1a teilweise bedeckendes Identifikationsmuster 7 auf. Das Identifikationsmuster 7 ist als Barcode ausgebildet und weist somit mehrere Elemente auf, die in einer Reihe angeordnet sind. Die Elemente weisen eine unterschiedliche Dicke sowie einen unterschiedlichen Abstand zwischen den Elementen auf.

Überstreicht nun ein Scanstrahl entlang der Scanrichtung S die Detektionsfläche 1a des Detektors 1, so wird der Scanstrahl zeitweise durch das Identifikationsmuster absorbiert, sodass nur zu den Zeitpunkten, bei welchen der Scanstrahl auf einen nicht von dem Identifikationsmuster 7 bedeckten Bereich der Detektionsfläche 1a trifft, ein Messsignal des Detektors 1 erzeugt wird.

Das Messsignal des Detektors 1 wird mittels der Steuereinheit 5 ausgewertet: Die Steuereinheit 5 weist eine Hochpassfilterung mit einer Mindestfrequenz von 1 MHz sowie eine Verstärkereinheit mit einem Verstärkungsfaktor von 3000 auf. Der Ausgang der Verstärkereinheit ist mit der Sendeeinheit 6 verbunden. Überstreicht nun ein Scanstrahl wie zuvor beschrieben gemäß Scanrichtung S die Detektionsfläche 1a, so wird das hierdurch erzeugte zeitlich modulierte Signal verstärkt mittels der Sendeeinheit 6 gesendet, sofern die Geschwindigkeit des Überstreichens groß genug ist, sodass die Messsignale den Hochpassfilter durchlaufen.

Die als LED ausgebildete Sendeeinheit 6 sendet hierbei mit einer Wellenlänge von 600 nm.

Es wird somit in kostengünstiger Weise ein Identifikationssignal mittels der Sendeeinheit 6 ausgesandt, dessen Struktur durch die Ausgestaltung und Anordnung des Identifikationsmusters 7 vorgegeben ist.

Die hierzu notwendige Energie ist in dem Energiezwischenspeicher 4 gespeichert, welcher als Akkumulator mit nachgeschaltetem Kondensator mit einer Speicherkapazität von 5 mAh beziehungsweise einer elektrischen Kapazität von 5 µF ausgebildet ist. Der Energiespeicher ist demnach mit der Steuereinheit 5 verbunden, welche wiederum mit der Sendeeinheit 6 verbunden ist. Weiterhin ist die als Perovskit-Solarzelle ausgebildete Solarzelle 3 über eine Ladeelektronik mit dem Energiezwischenspeicher 4 verbunden. Trifft Licht auf die Solarzelle 3, so wird der Energiezwischenspeicher aufgeladen.

In Figur 2 ist ein Ausschnitt eines zweiten Ausführungsbeispiels einer erfindungsgemäßen Identifikationsvorrichtung dargestellt. Das zweite Ausführungsbeispiel entspricht im Grundaufbau dem ersten Ausführungsbeispiel gemäß Figur 1, daher wird im Nachfolgenden lediglich auf die wesentlichen Unterschiede eingegangen:
Zusätzlich zum ersten Detektor 1 weist diese Ausführungsform einen zweiten Detektor 2 auf. Beide Detektoren sind teilweise mit einem Identifikationsmuster 7 bedeckt, wodurch sich eine Scanrichtung S (für Detektor1) und Scanrichtung S` für Detektor 2 ergibt. Detektor 2 ist in einem anderen Winkel als Detektor 1 angeordnet, in dieser beispielhaften Ausführung sind S und S` senkrecht zueinander.

Mit dieser Ausführung kann von Seiten des Identifikationssystems die relative Position dieser Identifikationsvorrichtung (in der Zeichenebene) exakt bestimmt werden. Dafür erfolgen zwei zeitlich aufeinanderfolgende linienförmige Scans in verschiedenen Scanrichtungen, vorzugsweise senkrecht zueinander.

Durch die Zuordnung des von der Sendeeinheit 6 zurückgesendeten Signals zu dem jeweiligen Winkel des ausgesandten Laserstrahls von Laser 10 kann die Position genau trianguliert werden.

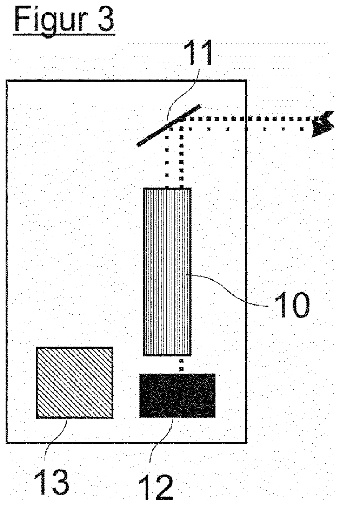

In Figur 3 ist eine Scaneinheit mit Empfangseinheit und Empfangs-Auswerteeinheit schematisch dargestellt. Die Scaneinheit bildet zusammen mit dem in Figur 1 dargestellten Ausführungsbeispiel einer Identifikationsvorrichtung ein Ausführungsbeispiel eines erfindungsgemäßen Identifikationssystems.

Die Scaneinheit weist einen Laser 10 auf, welcher einen kontinuierlichen Laserstrahl mit einer Wellenlänge von 700 nm erzeugt. Der Laserstrahl des Lasers 10 stellt somit einen optischen Scanstrahl dar. Dieser Scanstrahl wird mittels eines rotierenden Spiegels 11 abgelenkt und überstreicht somit ein zu scannendes Gebiet. Überstreicht der Scanstrahl hierbei die Detektionsfläche 1a der in Figur 1 dargestellten Identifikationsvorrichtung, so sendet aufgrund der Drehgeschwindigkeit des Spiegels von 1000 U/min und einer entsprechend ausreichend hohen Frequenz der Messsignale des Detektors 1 die Sendeeinheit 6 das Identifikationssignal aus.

Dieses wird mit einer als Photodetektor ausgebildeten Empfangseinheit 12 detektiert. Die Messsignale der Empfangseinheit 12 mittels einer mit der Empfangseinheit 12 verbundenen Empfangs-Auswerteeinheit 13 analysiert. Die Empfangs-Auswerteeinheit 13 ist als Rechner mit Programmspeicher ausgebildet und umfasst weiterhin eine Energiequelle, welche ebenso mit dem Laser 10 und einem elektrischen Motor zum Drehen des rotierenden Spiegels 11 verbunden ist.

Die Empfangs-Auswerteeinheit wertet nun das Messsignal der Empfangseinheit 12 wie folgt aus: In einem ersten Datenverarbeitungsschritt werden die analogen Eingangssignale gefiltert und die fallenden und steigenden Signalflanken bestimmt. Für die richtige Bestimmung der Zeitintervalle wird auf dem Barcode durch die ersten drei Balken ein genormtes Signalintervall erzeugt. So kann das Signal in digitale 1-0-Zeichenabfolgen umgewandelt werden. Das digitalisierte Signal wird dann mit einer im Empfänger vorhandenen Datenbank verglichen und so durch die spezifische Signatur dem erkannten Objekt zugeordnet. Aus einem Vergleich zwischen den im Empfänger bekannten räumlichen und ggf. zeitlichen Koordinaten des scannenden Laserstrahls kann bestimmt werden, in welcher Scanrichtung sich das Objekt zum Zeitpunkt des Scannens befand.

Hierdurch ist eine Identifikation der Identifikationseinrichtung gemäß Figur 1 anhand des von der Sendeeinheit 6 ausgesandten Identifikationssignals möglich.

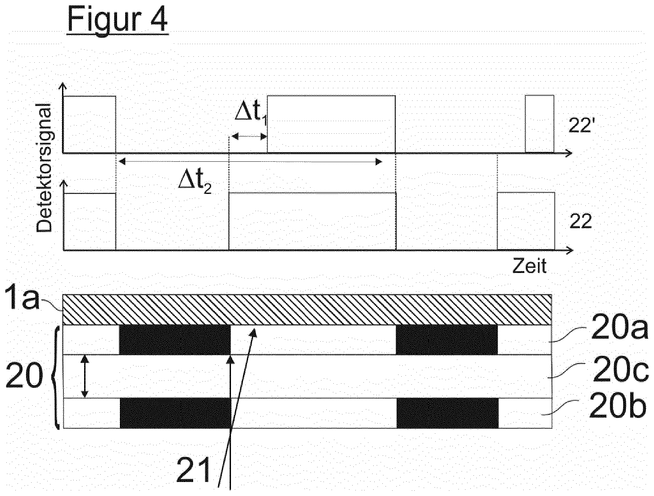

In Figur 4 ist ein Ausschnitt eines dritten Ausführungsbeispiels einer erfindungsgemäßen Identifikationsvorrichtung dargestellt. Das dritte Ausführungsbeispiel entspricht im Grundaufbau dem ersten Ausführungsbeispiel gemäß Figur 1, daher wird im Nachfolgenden lediglich auf die wesentlichen Unterschiede eingegangen:
Das dritte Ausführungsbeispiel weist ein dreidimensionales Identifikationsmuster 20 auf. Zur Verdeutlichung ist in Figur 4 lediglich ein Ausschnitt der Detektionsfläche 1a des Detektors 1 dargestellt. Auf der Detektionsfläche 1a ist das dreidimensionale Identifikationsmuster 20 angeordnet. In Figur 1 ist eine Draufsicht von oben auf die Identifikationsvorrichtung dargestellt. In Figur 4 ist ein Querschnitt durch die Detektionsfläche 1a des ersten Detektors 1 und das darauf angeordnete dreidimensionale Identifikationsmuster 20 dargestellt, um den Schichtaufbau des dreidimensionalen Identifikationsmusters 20 zu zeigen. In Figur 1 übertragen verläuft dieser Querschnitt somit entlang Richtung S, senkrecht zur Zeichenebene durch die einzelnen Elemente des Identifikationsmusters 7, welches in Figur 2 jedoch durch das dreidimensionale Identifikationsmuster 20 ersetzt ist, hindurch.

Zur Verdeutlichung der Winkelabhängigkeiten ist bei diesem Querschnitt die Detektionsfläche 1a obenliegend dargestellt.

Das dreidimensionale Identifikationsmuster weist folgenden Schichtaufbau auf:
In einer ersten Schicht 20a ist ein erster Barcode ausgebildet und in einer zweiten Schicht 20b ein zweiter Barcode.

Zwischen den Schichten 20a und 20b befindet sich eine transparente Schicht 20c. Die Schichten 20a bis 20c sind aus folgenden Materialien und mit folgenden Dicken ausgebildet: Schichten 20a und 20b bestehen aus transparenter PET-Folie mit jeweils 0,1 mm dicke. Beide sind teilweise mit schwarzer Farbe in Form des gewünschten Barcodes bedruckt. Schicht 20c besteht aus transparenter PET-Folie mit 0,5 mm Dicke.

In der Darstellung gemäß Figur 4 entsprechen sich die Muster gemäß erstem Barcode der ersten Schicht 20a und zweitem Barcode der zweiten Schicht 20b und liegen somit senkrecht zur Detektionsfläche 1a übereinander.

Diese dreidimensionale Anordnung von zwei Barcodes ermöglicht eine Bestimmung des Winkels zwischen dem Barcode und der Lichtquelle eines Scanstrahls wie der Scaneinheit gemäß Figur 3: Die beiden Barcodes sind wie zuvor beschrieben in einem definierten Abstand voneinander übereinander angebracht. Trifft nun der Scanstrahl gemäß Darstellung 21 senkrecht auf den Barcode, so bildet sich eine zeitliche Abfolge der Messsignale des Detektors 1 aus, welche der zeitlichen Abfolge eines eindimensionalen Identifikationsmusters, beispielsweise gemäß Figur 1, mit entsprechenden Verhältnissen von Bedeckung und Lücken zwischen den Bedeckungen entspricht. Hierbei ist anzumerken, dass typischerweise die Entfernung zwischen Scaneinheit und Identifikationsvorrichtung ein Vielfaches der Ausdehnung des Detektors 1 in Scanrichtung beträgt. Es kann somit näherungsweise davon ausgegangen werden, dass der Scanstrahl 21 sofort bei Überstreichen der Detektionsfläche 1a des Detektors 1 einen konstanten Winkel relativ zur Detektionsfläche 1a aufweist.

In Figur 4 ist schematisch die zeitliche Abfolge 22 für den senkrecht auftreffenden Scanstrahl 21 über der Detektionsfläche 1a dargestellt. Auf der x-Achse ist das Messsignal [a.u.] des Detektors 1 aufgetragen und auf der y-Achse die Zeit [a.u.].

Trifft hingegen der Scanstrahl nicht rechtwinklig auf die Detektionsfläche 1a wie im Beispiel 21' dargestellt, so ändert sich das Abschattungsmuster: Im dargestellten Fall von zwei identischen Barcodes 1 und 2 verbreitern sich im Fall des Scanstrahls 21' die Abdeckungsbereiche gegenüber den Abdeckungsbereichen, welche auf den Scanstrahl 21 einwirken. Wie in der zeitlichen Abfolge 22' ersichtlich, weist die zeitliche Abfolge 22' längere Abschattungszeiten und somit Signalsenken gegenüber der zeitlichen Abfolge 22 auf.

Der Einstrahlungswinkel des Scanstrahls 21 und 21' lässt sich aus dem Messsignal des Detektors 1 errechnen, wenn die geometrischen Parameter der beiden Barcodes bekannt sind, das heißt insbesondere Größe und Abstand der abschattenden Bereiche sowie die Dicken der Schichten 20a bis 20c. Dies ist auch dann möglich, wenn die Winkelgeschwindigkeit des rotierenden Spiegels 11 und der Abstand zwischen Scaneinheit und Identifikationsvorrichtung nicht bekannt sind. Ist wie zuvor beschrieben die Breite der transparenten und intransparenten Bereiche der Barcodes sowie der Abstand der Barcodes voneinander (insbesondere die Dicken der drei Schichten 20a bis 20c), so kann die Steuereinheit 5 der Identifikationsvorrichtung ausgebildet werden, den Einfallswinkel des Scanstrahls 21, 21' zu berechnen.

Ebenso ist eine Berechnung des Einfallswinkels des Scanstrahls 21, 21' mittels der Empfangs-Auswerteeinheit 13 möglich. Hierzu ist Information über die Dimensionierung der Barcodes erforderlich, beispielsweise eine normierte Größe von breiten und schmalen Balken der Barcodes sowie der Abstand der beiden Barcodes voneinander senkrecht zur Detektionsfläche 1a.

Zusammenfassend ändert sich somit abhängig von dem Winkel der Scaneinheit zu der Identifikationsvorrichtung mit dem dreidimensionalen Identifikationsmuster die relative Pulsbreite, das heißt das Verhältnis zwischen "hell" und "dunkel" bzw. Messsignalen und keinem Messsignal, wie durch die Pulsbreitenänderungen Δt₁ in der zeitlichen Abfolge 22' dargestellt, sowie die Dauer für den gesamten Scan des Barcodes.

Bei einem eindimensionalen Identifikationsmuster, wie beispielsweise dem Barcode gemäß Figur 1, ändert sich (wie auch bei einem dreidimensionalen Identifikationsmuster) in Abhängigkeit der Scangeschwindigkeit, beispielsweise der Rotationsgeschwindigkeit des rotierenden Spiegels 11, die Gesamtdauer des Scans, das heißt die Gesamtdauer, welcher der Scanstrahl zum Überstreichen der Detektionsfläche 1a benötigt. In beiden Fällen kann die Scangeschwindigkeit über die Abstände der vorderen Flanke eines Abschattungsbereiches bestimmt werden, wie beispielsweise in der zeitlichen Abfolge 22' durch Δt₂ gezeigt. Hierzu muss wieder eine Konvention über die räumlichen Abmessungen von Barcodes bestehen, wie zuvor beschrieben, sodass die Scanzeit in eine Scangeschwindigkeit umgerechnet werden kann.

Sind weiterhin der Abstand und der Winkel zweier dreidimensionaler Barcodes zueinander bekannt, lässt sich auch relativ zu diesen Barcodes die Position der Lichtquelle bestimmen und somit auch deren Abstand.

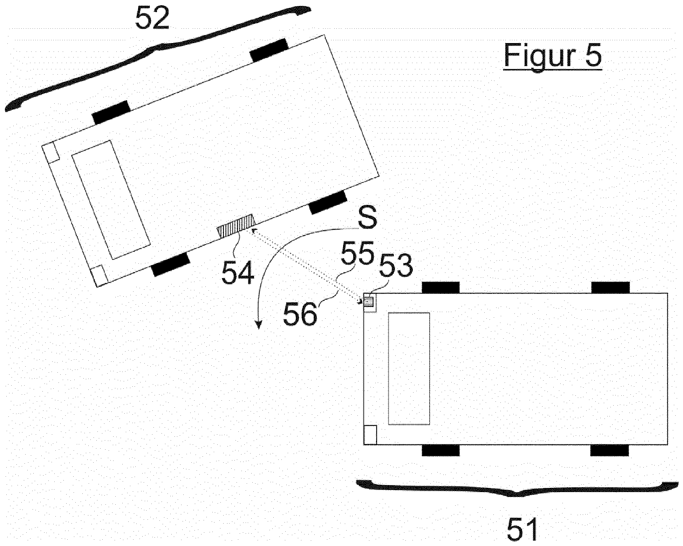

Figur 5 zeigt schematisch ein Anwendungsbeispiel der Erfindung.

Abgebildet sind zwei Personenkraftwagen (PKW) 51 und 52. PWK ist mit einem Identifikationssystem 53 ausgestattet. In diesem Fall ist das Identifikationssystem im Beleuchtungssystem des PKWs angebracht. An der Seite von PKW 52 ist eine Identifikationsvorrichtung 54 angebracht. Vom Identifikationssystem wird ein Scanstrahl 55 entlang Scanrichtung S ausgesendet. Beim Überstreichen der Identifikationsvorrichtung 54 sendet diese ein Identifikationssignal 56 aus, welches vom Identifikationssystem 53 detektiert wird. Die empfangenen Daten werden im Bordcomputer des PWK 51 weiterverarbeitet. Zunächst wird dort erkannt, dass es sich um einen anderen PKW handelt. Identifikationsvorrichtung 54 ist in dreidimensionaler Bauform wie in Figur 4 beschrieben ausgeführt. Somit lässt sich die Ausrichtung von PKW 52 relativ zu PKW 51 errechnen. Nach einigen Scans kann außerdem die Relativgeschwindigkeit von PKW 52 berechnet werden. Idealerweise ist PKW 51 noch mit weiteren Systemen wie LIDAR, Radar oder Kameras ausgestattet. In Kombination daraus lässt sich sehr zuverlässig und sehr schnell das dargestellte Szenario errechnen: PKW 52 schert in geringem Abstand in die Fahrbahn von PKW 51 ein. Der Bordcomputer von PKW 51 kann nun rechtzeitig Maßnahmen zur Kollisionsvermeidung einleiten.

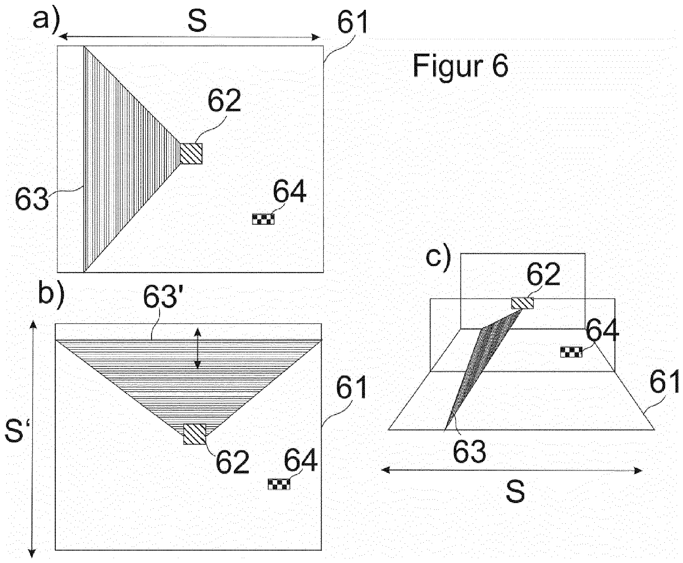

Figur 6 zeigt ein zweites Anwendungsbeispiel. Figur 6 a und b zeigen schematisch die Aufsicht auf eine Werkhalle, welche durch die Wände 61 begrenzt wird. An der Decke befindet sich ein Identifikationssystem 62, welches einen linienförmigen Laserstrahl 63 auf den Boden der Werkshalle strahlt. Wie in Figur 6a dargestellt wird dieser Laserstrahl 63 entlang Achse S durch die Werkhalle gescannt. Daraufhin erfolgt, wie in Figur 6b dargestellt, ein zweiter Scan mit Laserstrahl 63' entlang der Achse S` welche senkrecht zu S steht. Auf diese Weise wird die Werkhalle zwei Mal komplett gescannt. So wird bei jedem Scan die Identifikationsvorrichtung 64, welche auf einer autonomen Maschine angebracht ist, bestimmt. Identifikationsvorrichtung 64 weist hierbei zwei senkrecht zueinanderstehende Detektoren auf, wie in Figur 2 beschrieben. In Figur 6a wird so die Position entlang Achse S registriert, in Figur 6b die Position entlang Achse S`. Entsprechend kann aus beiden Scans die exakte Position der Maschine in der Werkshalle bestimmt werden. Zur besseren Vorstellung ist in Figur 6c die schräge 3D-Ansicht auf das Szenario von Figur 6a dargestellt.

### Bezugszeichenliste

- 1: erster Detektor
- 1a: Detektionsfläche
- 2: zweiter Detektor
- 3: Solarzelle
- 4: Energiezwischenspeicher
- 5: Steuereinheit
- 6: Identifikations-Sendeeinheit
- 7: Identifikationsmuster
- 10: Scanstrahl-Sendeeinheit
- 11: rotierender Spiegel
- 12: Empfangseinheit
- 13: Empfangs-Auswerteeinheit
- 20: dreidimensionales Identifikationsmuster
- 20a: erste Schicht
- 20b: zweite Schicht
- 20c: transparente Schicht
- 21, 21': Scanstrahl
- 22, 22': zeitliche Abfolge

## Patentansprüche

1. Identifikationsvorrichtung
mit einem optischen Detektor (1), einer Steuereinheit (5) und einer Identifikations-Sendeeinheit (6),
wobei der optische Detektor (1) eine Detektionsfläche mit einem die Detektionsfläche teilweise bedeckenden Identifikationsmuster aufweist und die Steuereinheit (5) mit dem Detektor (1) und der Identifikations-Sendeeinheit (6) derart zusammenwirkend ausgebildet ist,
dass abhängig von einer Analyse einer zeitlichen Abfolge von Messsignalen des Detektors (1) die Identifikations-Sendeeinheit (6) zum Senden eines Identifikationssignals ansteuerbar ist, dadurch dass bei Überstreichen des Identifikationsmusters durch einen Scanstrahl, abhängig von der Form und der Anordnung von Teilbereichen des Identifikationsmusters eine Generation der zeitlichen Abfolge von Signalen des Detektors erfolgt.

2. Identifikationsvorrichtung nach Anspruch 1,
**dadurch gekennzeichnet,**
**dass** die Steuereinheit (5) zur Durchführung einer Hochpassfilterung der Messsignale des Detektors (1) ausgebildet ist.

3. Identifikationsvorrichtung nach einem der vorangegangenen Ansprüche,
**dadurch gekennzeichnet,**
**dass** die Steuereinheit (5) eine Verstärkereinheit aufweist, um das Messsignal verstärkt an die Identifikations-Sendeeinheit (6) weiterzuleiten.

4. Identifikationsvorrichtung nach einem der vorangegangenen Ansprüche,
**dadurch gekennzeichnet,**
**dass** der Detektor (1) als Halbleiter-Photodetektor ausgebildet ist, insbesondere als Perowskit-Photodetektor.

5. Identifikationsvorrichtung nach einem der vorangegangenen Ansprüche,
**dadurch gekennzeichnet,**
**dass** die Identifikationsvorrichtung eine photovoltaische Solarzelle (3) zur Energieversorgung aufweist, insbesondere eine Solarzelle (3) und einen mit der Solarzelle (3) verbundenen Energiezwischenspeicher (4), insbesondere einem Akkumulator und/oder einem Kondensator.

6. Identifikationsvorrichtung nach den Ansprüchen 4 und 5,
**dadurch gekennzeichnet,**
**dass** die photovoltaische Solarzelle (3) und der Photodetektor auf den gleichen Halbleitermaterialien basierend ausgebildet sind, insbesondere, dass photovoltaische Solarzelle (3) und Photodetektor auf Perovskit basierend ausgebildet sind.

7. Identifikationsvorrichtung nach einem der vorangegangenen Ansprüche,
**dadurch gekennzeichnet,**
**dass** das Identifikationsmuster derart ausgebildet ist, dass die Detektionsoberfläche entlang zumindest einer geraden Linie auf der Detektionsoberfläche mehrfach alternierend durch das Identifikationsmuster bedeckt ist.

8. Identifikationsvorrichtung nach einem der vorangegangenen Ansprüche,
**dadurch gekennzeichnet,**
**dass** das Identifikationsmuster als dreidimensionales Muster ausgebildet ist.

9. Identifikationsvorrichtung nach Anspruch 8,
**dadurch gekennzeichnet,**
**dass** das Identifikationsmuster zumindest eine erste und eine zweite Musterebene aufweist, wobei die erste Musterebene zwischen zweiter Musterebene und Detektionsfläche angeordnet ist,
insbesondere, dass zwischen erster und zweiter Musterebene eine optische transparente Ebene angeordnet ist.

10. Identifikationssystem mit einer Identifikationsvorrichtung nach einem der vorangegangenen Ansprüche,
**dadurch gekennzeichnet,**
**dass** das Identifikationssystem eine Scanstrahl-Sendeeinheit (10) zum Senden eines optischen Scanstrahls, insbesondere eines punkt- oder bevorzugt linienförmigen Scanstrahl, bevorzugt eines Laserstrahls, aufweist und
**dass** das Identifikationssystem eine Empfangseinheit (12) für von der Identifikations-Sendeeinheit (6) der Identifikationsvorrichtung ausgesandten Strahlung sowie eine Empfangs-Auswerteeinheit (13) aufweist, um abhängig von Empfangsdaten der Empfangseinheit (12) die Identifikationsvorrichtung zu identifizieren.

11. Verfahren zur Identifikation eines Objekts mittels eines Identifikationssystems gemäß Anspruch 10,
mit den Verfahrensschritten
- Senden eines Scanstrahls mittels einer Scanstrahl-Sendeeinheit (10), so dass der Scanstrahl eine teilweise durch ein Identifikationsmuster bedeckte Detektionsfläche eines Detektors (1) einer Identifikationsvorrichtung überstreicht,
- Empfangen von Strahlung, welche von der Identifikationsvorrichtung ausgeht,
**dadurch gekennzeichnet,**
**dass** mittels der Identifikationsvorrichtung ein Auswerten von Messsignalen des Detektors (1) und abhängig von der Messsignalauswertung aktives Senden eines Identifikationssignals mittels einer Identifikations-Sendeeinheit (6) der Identifikationsvorrichtung erfolgt.

12. Verfahren nach Anspruch 11,
**dadurch gekennzeichnet,**
**dass** die Wellenlänge oder der Wellenlängenbereich des Scanstrahls unterschiedlich zu der Wellenlänge oder dem Wellenlängenbereich der von der Identifikations-Sendeeinheit (6) ausgesandten Strahlung ist.

13. Verfahren nach einem der Ansprüche 11 bis 12,
**dadurch gekennzeichnet,**
**dass** die Messsignalauswertung eine Hochpassfilterung des Messsignals des Detektors (1) umfasst.

14. Verfahren nach einem der Ansprüche 11 bis 13,
**dadurch gekennzeichnet,**
**dass** das Messsignal des Detektors (1) in verstärkter und bevorzugt weiter bearbeiteter Form mittels der Identifikations-Sendeeinheit (6) als Identifikationssignal ausgesandt wird.

15. Verfahren nach einem der Ansprüche 11 bis 14,
**dadurch gekennzeichnet,**
**dass** mittels des Messsignals des Detektors (1) und/oder des Identifikationssignals der Winkel zwischen Identifikations-Sendeeinheit (6) und Detektionsfläche des Detektors (1) der Identifikationsvorrichtung und/oder die Entfernung zwischen Identifikations-Sendeeinheit (6) und Identifikationsvorrichtung bestimmt wird und/oder
**dass** mittels des Scanstrahls zusätzlich eine Abstandsmessung basierend auf einer gemessenen Lichtlaufzeit des Scanstrahls erfolgt, insbesondere eine LIDAR-Messung.

## Claims

1. Identification device with an optical detector (1), a control unit (5) and an identification transmitter unit (6), wherein the optical detector (1) includes a detection surface with an identification pattern partially covering the detector surface and the control unit (5) is constructed to cooperate with the detector (1) and the identification transmitter unit (6) such that, independently of an analysis of a temporal sequence of measurement signals from the detector (1), the identification transmitter unit (6) is controllable to transmit an identification signal due to the fact that when moving over the identification pattern with a scanning beam, generation of the temporal sequence of signals from the detector occurs in dependence on the shape and arrangement of regions of the detection pattern.

2. Identification device as claimed in Claim 1, **characterised in that** the control unit (5) is constructed to perform high-pass filtering of the measurement signals from the detector (1).

3. Identification device as claimed in one of the preceding claims, **characterised in that** the control unit (5) includes an amplifier unit in order to transmit the measurement signal on to the identification transmitter unit (6) in amplified form.

4. Identification device as claimed in one of the preceding claims, **characterised in that** the detector (1) is constructed as a semiconductor photodetector, particularly a Perovskite photodetector.

5. Identification device as claimed in one of the preceding claims, **characterised in that** the identification device includes a photovoltaic solar cell (3) for energy supply, particularly a solar cell (3) and a temporary energy store (4) connected to the solar cell (3), particularly an accumulator and/or a condenser.

6. Identification device as claimed in Claims 4 and 5, **characterised in that** the photovoltaic solar cell (3) and the photodetector are constructed based on the same semiconductor materials, particularly that the photovoltaic solar cell (3) and photodetector are constructed based on Perovskite.

7. Identification device as claimed in one of the preceding claims, **characterised in that** the identification pattern is so constructed that the detection surface is repeatedly alternatingly covered by the identification pattern along at least one straight line on the detection surface.

8. Identification device as claimed in one of the preceding claims, **characterised in that** the identification pattern is constructed as a three-dimensional pattern.

9. Identification device as claimed in Claim 8, **characterised in that** the identification pattern includes at least one first and one second pattern plane, wherein the first pattern plane is arranged between the second pattern plane and the detection surface, particularly that an optically transparent plane is arranged between the first and second pattern planes.

10. An identification system with an identification device as claimed in one of the preceding claims, **characterised in that** the identification system includes a scanning beam transmitter unit (10) for transmitting an optical scanning beam, particularly a punctiform or, preferably, linear scanning beam, preferably a laser beam and that the identification system includes a receiver unit (12) for radiation emitted by the identification transmitter unit (6) of the identification device and a receiver analysis unit (13) in order to identify the identification device in dependence on the received data of the receiver unit (12).

11. A method of identifying an object by means of an identification system as claimed in Claim 10, including the method steps of
- emitting a scanning beam by means of a scanning beam transmission unit (10) so that the scanning beam moves over a detection surface, partially covered by an identification pattern, of a detector (1) of an identification device,
- receiving radiation, which emanates from the identification device,
**characterised in that** by means of the identification device an analysis of measurement signals from the detector (1) is effected and, in dependence on the measurement signal analysis, active transmission of an identification signal by means of an identification transmitter unit (6) of the identification device occurs.

12. A method as claimed in Claim 11, **characterised in that** the wavelength or the wavelength range of the scanning beam is different to the wavelength or the wavelength range of the radiation emitted by the identification transmitter unit (6).

13. A method as claimed in one of Claims 11 to 12, **characterised in that** the measurement signal analysis includes a high-pass filtering of the measurement signal from the detector (1).

14. A method as claimed in one of Claims 11 to 13, **characterised in that** the measurement signal from the detector (1) is transmitted in amplified and preferably further processed form by means of the identification transmitter unit (6) as an identification signal.

15. A method as claimed in one of Claims 11 to 14, **characterised in that** by means of the measurement signal from the detector (1) and/or the identification signal, the angle between the identification transmitter unit (6) and the detection surface of the detector (1) of the identification device and/or the distance between the identification transmitter unit (6) and the identification device is determined and/or that, by means of the scanning beam, a distance measurement additionally occurs based on a measured light travel time of the scanning beam, particularly a LIDAR measurement.

## Revendications

1. Dispositif d'identification,
avec un détecteur optique (1), une unité de commande (5) et une unité d'émission d'identification (6),
dans lequel le détecteur optique (1) présente une surface de détection avec un motif d'identification recouvrant en partie la surface de détection et l'unité de commande (5) est réalisée de manière à coopérer avec le détecteur (1) et l'unité d'émission d'identification (6) de telle manière, que l'unité d'émission d'identification (6) est pilotable pour émettre un signal d'identification en fonction d'une analyse d'une séquence chronologique de signaux de mesure du détecteur (1), **caractérisé en ce que** lors du balayage du motif d'identification par un faisceau de balayage, une génération de la séquence chronologique de signaux du détecteur a lieu en fonction de la forme et de la disposition des zones partielles du motif d'identification.

2. Dispositif d'identification selon la revendication 1,
**caractérisé en ce**
**que** l'unité de commande (5) est réalisée pour mettre en œuvre un filtrage par filtre passe-haut des signaux de mesure du détecteur (1).

3. Dispositif d'identification selon l'une des revendications précédentes,
**caractérisé en ce**
**que** l'unité de commande (5) présente une unité d'amplification pour transférer le signal de mesure de manière amplifiée à l'unité d'émission d'identification (6) .

4. Dispositif d'identification selon l'une des revendications précédentes,
**caractérisé en ce**
**que** le détecteur (1) est réalisé en tant que photodétecteur à semi-conducteurs, en particulier en tant que photodétecteur à pérovskite.

5. Dispositif d'identification selon l'une des revendications précédentes,
**caractérisé en ce**
**que** le dispositif d'identification présente une cellule solaire photovoltaïque (3) pour l'alimentation en énergie, en particulier une cellule solaire (3) et un système de stockage intermédiaire d'énergie (4) relié à la cellule solaire (3), en particulier un accumulateur et/ou un condensateur.

6. Dispositif d'identification selon les revendications 4 et 5,
**caractérisé en ce**
**que** la cellule solaire photovoltaïque (3) et le photodétecteur sont réalisés à base des mêmes matériaux à semi-conducteurs, en particulier que la cellule solaire photovoltaïque (3) et le photodétecteur sont réalisés à base de pérovskite.

7. Dispositif d'identification selon l'une des revendications précédentes,
**caractérisé en ce**
**que** le motif d'identification est réalisé de telle manière que la surface de détection est recouverte à plusieurs reprises en alternance par le motif d'identification le long d'au moins une ligne droite sur la surface de détection.

8. Dispositif d'identification selon l'une des revendications précédentes, **caractérisé en ce**
**que** le motif d'identification est réalisé en tant que motif tridimensionnel.

9. Dispositif d'identification selon la revendication 8,
**caractérisé en ce**
**que** le motif d'identification présente au moins un premier et un deuxième niveaux de motif, dans lequel le premier niveau de motif est disposé entre le deuxième niveau de motif et la surface de détection,
en particulier, qu'un niveau optiquement transparent est disposé entre les premier et deuxième niveaux de motif.

10. Système d'identification avec un dispositif d'identification selon l'une des revendications précédentes,
**caractérisé en ce**
**que** le système d'identification présente une unité d'émission de faisceau de balayage (10) pour émettre un faisceau de balayage optique, en particulier un faisceau de balayage avec une forme de point ou de manière préférée avec une forme linéaire, de manière préférée d'un faisceau laser, et
**que** le système d'identification présente une unité de réception (12) pour le rayonnement envoyé par l'unité d'émission d'identification (6) du dispositif d'identification ainsi qu'une unité d'évaluation de réception (13) pour identifier le dispositif d'identification en fonction de données de réception de l'unité de réception (12).

11. Procédé d'identification d'un objet au moyen d'un système d'identification selon la revendication 10,
avec les étapes de procédé
- d'émission d'un faisceau de balayage au moyen d'une unité d'émission de faisceau de balayage (10) de sorte que le faisceau de balayage balaye une surface de détection recouverte en partie par un motif d'identification d'un détecteur (1) d'un dispositif d'identification,
- de réception d'un rayonnement, lequel part du dispositif d'identification,
**caractérisé en ce**
**qu'**une évaluation de signaux de mesure du détecteur (1) est effectuée au moyen du dispositif d'identification et l'émission active d'un signal d'identification est effectuée au moyen d'une unité d'émission d'identification (6) du dispositif d'identification en fonction de l'évaluation de signaux de mesure.

12. Procédé selon la revendication 11,
**caractérisé en ce**
**que** la longueur d'onde ou la plage de longueurs d'onde du faisceau de balayage est différente de la longueur d'onde ou de la plage de longueurs d'onde du rayonnement envoyé par l'unité d'émission d'identification (6).

13. Procédé selon l'une des revendications 11 à 12,
**caractérisé en ce**
**que** l'évaluation de signaux de mesure comprend un filtrage par filtre passe-haut du signal de mesure du détecteur (1).

14. Procédé selon l'une des revendications 11 à 13,
**caractérisé en ce**
**que** le signal de mesure du détecteur (1) est envoyé sous une forme amplifiée et de manière préférée traitée ultérieurement au moyen de l'unité d'émission d'identification (6) en tant que signal d'identification.

15. Procédé selon l'une des revendications 11 à 14,
**caractérisé en ce**
**que** l'angle entre l'unité d'émission d'identification (6) et la surface de détection du détecteur (1) du dispositif d'identification et/ou l'éloignement entre l'unité d'émission d'identification (6) et le dispositif d'identification sont déterminés au moyen du signal de mesure du détecteur (1) et/ou du signal d'identification, et/ou
**qu'**une mesure d'espacement est effectuée en supplément au moyen du faisceau de balayage sur la base d'un temps de propagation de lumière mesuré du faisceau de balayage, en particulier une mesure LIDAR.
